# EUROPÄISCHE PATENTSCHRIFT

(11) **EP 2 180 791 B1**
(45) Veröffentlichungstag und Bekanntmachung des Hinweises auf die Patenterteilung: **16.02.2011**
(21) Anmeldenummer: 08786737.0
(22) Anmeldetag: 01.08.2008
(51) Int. Cl.: A01N 43/80, A01N 59/00, A01N 31/02, A01N 25/02, A01P 1/00

(54) **BIOZIDE ZUSAMMENSETZUNG UMFASSEND DAS KALIUMSALZ DES 1,2-BENZISOTHIAZOLIN-3-ONS UND ETHYLENGLYKOL**
BIOCIDAL COMPOSITION INCLUDING THE POTASSIUM SALT OF 1,2-BENZISOTHIAZOLIN-3-ONE AND ETHYLENE GLYCOL
COMPOSITION BIOCIDE COMPRENANT LE SEL DE POTASSIUM DE LA L,2-BENZISOTHIAZOLIN-3-ONE ET DE L'ÉTHYLÈNE GLYCOL

(30) Priorität: 01.08.2007 EP 07113604
(43) Veröffentlichungstag der Anmeldung: 05.05.2010
(73) Patentinhaber: THOR GmbH, 67346 Speyer (DE)
(72) Erfinder: BAUM, Rüdiger, 68753 Waghäusel (DE)
(74) Vertreter: Jacobi, Markus Alexander
(86) Internationale Anmeldenummer: PCT/EP2008/060117
(87) Internationale Veröffentlichungsnummer: WO 2009/016252

(56) Entgegenhaltungen:
- WO-A-02/14293
- WO-A-94/16564
- DE-A1- 2 840 273

## Beschreibung

Die Erfindung betrifft eine biozide Zusammensetzung umfassend das Kaliumsalz des 1,2-Benzisothiazolin-3-ons (BIT) und Monoethylenglykol als Lösungsmittel in einem definierten Verhältnis.

1,2-Benziosthiazolin-3-on, nachfolgend als BIT bezeichnet, wird aufgrund seiner bakteriziden und fungiziden Eigenschaften in der Technik häufig als Biozid zum Schutz wässriger Medien und wasserenthaltender technischer Produkte gegen mikrobiologischen Befall verwendet. Da BIT meist in Form eines Konzentrates den zu schützenden Medien oder technischen Produkten hinzugegeben wird, ist es wünschenswert, dass es in Form einer hochkonzentrierten, flüssigen sowie stabilen Zusammensetzung verfügbar ist.

Zur Herstellung der flüssigen Zusammensetzungen von BIT ist es bereits bekannt, das bei der Synthese anfallende rohe BIT, mit technischer Reinheit, welches üblicherweise in Form eines feuchten Filterkuchens erhältlich ist, in einer wässrigen Dispersion zu verwenden. Derartige wässrige Dispersionen sind jedoch nicht lagerstabil, da in den Dispersionen bei längerer Lagerung Feststoffe abgeschieden werden und sich Konzentrationsgradienten ausbilden. Dies kann beispielsweise dazu führen, dass Pumpen verstopfen, die zum Abmessen definierter Mengen der Dispersion in das zu behandelnde Medium verwendet werden.

Um derartige Nachteile zu überwinden, wurden in der Vergangenheit flüssige Zusammensetzungen von rohem BIT entwickelt, die aus Lösungen des Produkts in einem Amin oder Amingernisch, das gegebenenfalls etwas Wasser enthält, bestehen. Diese Zusammensetzungen sind in den Patentschriften GB 1191253 und GB 1330531 beschrieben. Die in der ersten Patentschrift beschriebenen Zusammensetzungen sollen bis zu 0 °C und sogar darunter lagerstabil sein, während die in der zweiten Patentschrift beschriebenen Zusammensetzungen bis zu Temperaturen bis -10 °C lagerstabil sein sollen.

Für gewisse Anwendungen sind jedoch die vorstehend beschriebenen Amine enthaltenden Zusammensetzungen von rohem BIT ungeeignet. So ist es nicht wünschenswert, dass Amine in direkten Kontakt mit Nahrungsmitteln gelangen, wie dies bei der Verwendung in Klebstoffen auf Wasserbasis in der Nahrungsmittelverpackungsindustrie der Fall sein kann. Aminlösungen sind flüchtig und können zudem einen unangenehmen Geruch aufweisen. Weiterhin können die Aminsalze von rohem BIT bei der Verwendung als Biozide ungeeignet sein, wenn sie zur Gebindekonservierung bestimmter Polymeremulsionen verwendet werden, da die Aminsalze eine Veränderung der Produkteigenschaften verursachen können. Amine können ebenfalls mit bestimmten Bioziden reagieren und diese deaktivieren, was weiterhin die Verwendung von Aminsalz-Formulierungen von BIT, wenn sie mit solchen Bioziden verwendet werden, beschränkt.

Um diese mit der Verwendung von Aminen zusammenhängenden Probleme zu vermeiden, wird BIT mittlerweile häufig als ein Alkalimetallsalz in einem oder mehreren wassermischbaren Lösungsmitteln wie Dipropylenglykol formuliert. Dies geht beispielsweise aus der US 4,188,376 A hervor. Derartige Zusammensetzungen sind stabile Lösungen, die Temperaturwechseln widerstehen und selbst, wenn sie einmal gefroren sind, sich beim Erwärmen zur erneuten Bildung einer stabilen Lösung erholen. Formulierungen dieser Art, die 20 % BIT und 65 % Dipropylenglykol enthalten, wobei der Rest Wasser ist, und worin das BIT zum Natrium-BIT-Salz durch Umsetzen von 1,1 Mol Natriumhydroxid mit 1 Mol BIT umgesetzt wurde, sind in Beispiel 1 der US 4,188,376 A beschrieben und ferner unter dem Handelsnamen Proxel GXL^{™} (Arch Chemicals) im Handel erhältlich. Diese Dipropylenglykolformulierungen weisen jedoch, selbst wenn sie in fluidem Zustand bleiben, eine hohe Viskosität bei niedrigen Temperaturen auf, was Probleme bei der Abmessung der korrekten Dosierung, insbesondere mit Hilfe von Pumpen verursacht. Ein weiterer schwerwiegender Nachteil derartiger Zusammensetzungen ist ihr hoher pH-Wert, der üblicherweise bei 12 oder darüber liegt. Ein derartig hoher pH-Wert kann zur Koagulation aufgrund des unterschiedlichen pH-Wertes des Mediums führen, wenn die BIT-Zusammensetzung zum zu schützenden Medium wie beispielsweise einer Emulsionsfarbe oder einem Latex zugegeben wird. Darüber hinaus sind die vorstehend beschriebenen Zusammensetzungen stark ätzend. Die hohe Viskosität und der hohe pH-Wert werden durch die Kombination der Menge und Art des eingesetzten Lösungsmittels und ebenfalls durch die Menge des Alkalis verursacht, von denen beide bis jetzt als notwendig angesehen werden, um stabile Lösungen vom Natriumsalz des BIT herzustellen.

Eine weitere Zusammensetzung mit einem Gehalt von 20 Gew.-% BIT wird unter dem Markennamen ACTICIDE^{®} B20 (N) von der Anmelderin vertrieben. In dieser Zusammensetzung liegt das BIT in Form seines Kaliumsalzes vor.

Die WO 94/16564 lehrt, den Nachteil eines überhöhten pH-Wertes zu vermeiden, indem einerseits geringere Mengen NaOH und andererseits weniger Dipropylenglykol bei der Herstellung konzentrierter BIT-Zusammensetzungen eingesetzt wurden. Die in dieser Druckschrift beschriebene stabile Zusammensetzung umfasst jedoch lediglich zwischen 5 bis 25 Gew.-% BIT.

Ausgehend von dem Stand der Technik lag der Erfindung dabei die Aufgabe zugrunde, fließfähige, stabile biozide Zusammensetzungen mit einem hohen Gehalt an BIT zur Verfügung zu stellen. Wünschenswerterweise sollen die erfindungsgemäßen Zusammensetzungen darüber hinaus eine hohe Lagerstabilität aufweisen.

Überraschenderweise wurden nun neue biozide Zusammensetzungen auf Basis von 1,2-Benzisothiazolin-3-on, im Folgenden als BIT bezeichnet, gefunden, die die Nachteile des Standes der Technik vorteilhafterweise überwinden.

Die vorliegende Erfindung betrifft daher biozide Zusammensetzungen, die 25 bis 50 Gew.-% BIT, 30 bis 70 Gew.-% Monoethylenglykol und optionsweise weitere Bestandteile umfassen, wobei sich die einzelnen Bestandteile der Zusammensetzung auf insgesamt 100 Gew.-% addieren. Die stabilen Zusammensetzungen kennzeichnen sich dadurch, dass bezogen auf je ein Mol BIT 0,5 bis 1,1 Mol K⁺-Ionen, bevorzugt 0,7 bis 1,0 Mol K⁺-Ionen, besonders bevorzugt 0,90 bis 0,98 Mol K⁺ -Ionen, am meisten bevorzugt 0,92 bis 0,95 Mol K⁺ -Ionen in der bioziden Zusammensetzung vorhanden sind. Die gleichzeitige Anwesenheit von BIT und K⁺-Ionen kann im Sinne der Erfindung so verstanden werden, dass das BIT zumindest teilweise in Form seines Kaliumsalzes vorliegt. Folglich ist der im Rahmen der Offenbarung verwendete Begriff "Kaliumsalz des BIT" so zu verstehen, dass neben BIT K⁺-Ionen in der erfindungsgemäßen bioziden Zusammensetzung vorhanden sind.

Gemäß einer bevorzugten Ausführungsform der Erfindung wird ein mol BIT durch Umsetzen mit 0,8 bis 1,0 mol einer oder mehrerer Basen bevorzugt mit 0,90 bis 0,98 mol einer oder mehrerer Basen neutralisiert und somit zumindest teilweise in die Form seines Salzes überführt. Als Base eignen sich Alkalihydroxide sowie Amine und Alkanolamine. Bevorzugte Basen sind Lithium-, Natrium- oder Kaliumhydroxid. Am meisten bevorzugt ist Kaliumhydroxid.

Das Salz des BIT kann jedes brauchbare Kation wie Amin, einschließlich Alkanolamin oder Metall umfassen. Bevorzugte Salze des BIT sind solche mit einem einwertigen Metall, insbesondere einem Alkalimetall wie Lithium, Natrium oder Kalium. Am meisten bevorzugt ist das Alkalimetallsalz ein Kaliumsalz. Liegt gemäß einer Ausführungsform der Erfindung das BIT beispielsweise zu 50 % in Form seines Kaliumsalzes vor, so können die weiteren 30 bis 50 % des BIT ebenfalls neutralisiert sein und in Form weiterer Salze wie Alkali- und /oder Aminsalze in der erfindungsgemäßen Zusammensetzung vorhanden sein.

Das Kaliumsalz des BIT wird gemäß einer Ausführungsform der Erfindung durch Umsetzen von Kaliumhydroxid mit BIT gebildet. Der oder die weiteren Bestandteile, der bioziden Zusammensetzung können gemäß einer bevorzugten Ausführungsform Wasser und/oder ein oder mehrere Lösungsmittel sein, die ausgewählt sind aus der Gruppe bestehend aus aliphatischen Alkoholen mit 1 bis 4 Kohlenstoffatomen, z. B. Ethanol und Isopropanol, Glykol, z. B. Ethylenglykol, Diethylenglykol, 1,2-Propylenglykol, Dipropylenglykol, Tripropylenglykol, Glykolether, z. B. Butylglykol und Butyldiglykol, Glykolester, z. B. Butyldiglykolacetat oder 2,2,4-Trimethylpenthandiolmonoisobutyrat, Polyethylenglykol, Propylenglykol und N,N-Dimethylformamid. Die stabile biozide Zusammensetzung weist eine starke Wirkung gegen Mikroorganismen auf und zeichnet sich besonders durch eine hohe Lagerstabilität aus.

Gemäß einer Ausführungsform der Erfindung liegt das BIT zu 50 bis 100 %, bevorzugt zu 70 bis 100 %, mehr bevorzugt zu 90 bis 98 %, am meisten bevorzugt zu 92 bis 95 % in Form seines Kaliumsalzes vor. Diese Mengenangaben beziehen sich dabei auf das molare Verhältnis der vorliegenden Menge an BIT und der vorliegenden Menge an K⁺-Ionen. Gemäß der Erfindung kann das BIT auch gänzlich als Kaliumsalz vorliegen, wobei in diesem Falle die molare Konzentration der K⁺-Ionen der molaren Konzentration des BIT in der erfindungsgemäßen bioziden Zusammensetzung entspricht.

Gemäß einer bevorzugten Ausführungsform der Erfindung beträgt der Anteil des BIT an der bioziden Zusammensetzung 25 bis 50 Gew.-%, bevorzugt 30 bis 45 Gew.-%, besonders bevorzugt 30 bis 40 Gew.-% bezogen auf das Gesamtgewicht der Zusammensetzung. Hierdurch wird eine konzentrierte biozide Zusammensetzung erhalten deren Gehalt an BIT weit über den aus dem Stand der Technik bekannten Konzentrationen liegt. Die Menge an Monoethylenglykol kann über weite Bereiche variiert werden und beträgt 30 bis 70 Gew.-%, bevorzugt 35 bis 55 Gew.-%, besonders bevorzugt 40 bis 50 Gew.-% bezogen auf das Gesamtgewicht der Zusammensetzung. Vorteilhafterweise weisen die erfindungsgemäßen Zusammensetzungen bedingt durch die Verwendung des Monoethylenglykols als Lösungsmittel eine niedrigere Viskosität als die handelsüblichen Formulierungen von BIT auf, was ein einfaches Abmessen genauer Dosierungen der erfindungsgemäßen Zusammensetzung ermöglicht.

Der Ausdruck "stabil" bedeutet in dem vorliegenden Fall, dass die Zusammensetzungen bei längerem Lagern nahezu keine Feststoffe abscheiden und auch bei anhaltenden Temperaturen von 0 °C nicht auskristallisieren oder sich verfestigen. Die letztgenannte Eigenschaft ist für den Fall wichtig, dass die Zusammensetzungen in kühlen Regionen im Freien gelagert werden. Sollten die erfindungsgemäßen Zusammensetzungen in Folge noch tieferer Temperaturen gefrieren, so tauen sie ohne Änderung ihrer Eigenschaften wieder auf und kehren in den ursprünglichen Zustand zurück. Zudem weisen sie vorteilhafterweise eine Stabilität gegenüber wiederholtem Gefrieren und Auftauen auf.

Gemäß einer weiteren Ausführungsform der Erfindung können je nach Anforderung an die stabile biozide Zusammensetzung neben dem Kaliumsalz des BIT auch weitere Salze, bevorzugt Alkalisalze des BIT, wie dessen Natriumsalz und Lithiumsalz, in der erfindungsgemäßen Zusammensetzung vorhanden sein.

Gemäß einer Ausführungsform der Erfindung wird die stabile biozide Zusammensetzung durch Umsetzen von Kaliumhydroxid und BIT in Monoethylenglykol hergestellt. Dabei kann BIT mit einem Wassergehalt von 0 bis 30 Gew.-% verwendet werden. Die bei der Herstellung der erfindungsgemäßen bioziden Zusammensetzung eingesetzte Menge an Kaliumhydroxid kann über weite Bereiche hinweg variiert werden und beträgt 0,50 bis 1,1 Mol, bevorzugt 0,7 Mol bis 1,0 Mol, besonders bevorzugt 0,90 bis 0,98 Mol, am meisten bevorzugt 0,92 bis 0,95 Mol bezogen auf je ein Mol BIT.

Eine Zusammensetzung enthaltend BIT und Monoethylenglykol in den angegebenen Gewichtsverhältnissen, die dadurch gekennzeichnet ist, dass das BIT zumindest teilweise in Form seines Kaliumsalzes vorliegt wird nachstehend als "erfindungsgemäße biozide Zusammensetzung" bezeichnet werden. Eine "erfindungsgemäße biozide Zusammensetzung" kann neben dem BIT als biozider Wirkkomponente sowie dem Monoethylenglykol in den angegebenen Gewichtsverhältnissen ein oder mehrere weitere Bestandteile aufweisen. Der oder die weiteren Bestandteile können dabei eine mikrobiozide Wirkung aufweisen, oder sie können keine mikrobizide Wirkung aufweisen, also etwa ein Lösungsmittel, Dispergiermittel oder Suspensionsmittel sein.

In einer weiteren Ausführungsform der Erfindung besteht die erfindungsgemäße biozide Zusammensetzung im Wesentlichen aus BIT als biozider Wirkkomponente, d.h., dass neben dem BIT wohl noch ein oder auch mehrere andere Biozide enthalten sein können, diese aber in einer solchen Menge vorliegen, in der kein Beitrag des jeweiligen von dem BIT verschiedenen Biozids zum Gesamteffekt der entstehenden Mischung vorliegt. Wenn also die biozide Wirkung einer erfindungsgemäßen Biozidzusarnmensetzung, die - neben dem BIT als wesentlichem Bestandteil - noch ein oder mehrere weitere Biozide in untergeordneter bzw. geringfügiger Konzentration aufweist, nicht verändert ist gegenüber dem Einsatz der erfindungsgemäßen bioziden Zusammensetzung, wird dieses im Zusammenhang mit der vorliegenden Erfindung als "im Wesentlichen bestehend" bezeichnet. Es können ein oder mehrere weitere Bestandteile ohne eine biozide Wirkung vorhanden sein, etwa Lösungsmittel.

In einer weiteren Ausführungsform kann die erfindungsgemäße biozide Zusammensetzung aus dem BIT als einzigen bioziden Wirkstoff bestehen, also einem Wirkstoffgehalt von 100% BIT in den angegebenen Gewichtsverhältnissen. In einem solchen Fall ist es lediglich möglich, dass ein oder mehrere weitere Bestandteile ohne eine biozide Wirkung vorhanden sind, etwa Lösungsmittel.

Die erfindungsgemäßen stabilen bioziden Zusammensetzungen haben einen pH-Wert von 9 bis 11, bevorzugt von 9 bis 10, besonders bevorzugt von 9,3 bis 9,6 und eine Viskosität, gemessen nach Brookfield bei 20 °C mit Spindel 2 bei 30 U/min von kleiner 500 mPas, bevorzugt kleiner 250 mPas, besonders bevorzugt von kleiner 150 mPas. Für diese Zusammensetzungen wurde gefunden, dass sie leicht gießbar und pumpfähig bei niedrigen Temperaturen bis mindestens 0 °C sind und keine nachteiligen Eigenschaften aufweisen, wie Trennung, wenn sie bei erhöhten Temperaturen von etwa 40 °C oder niedrigeren Temperaturen von etwa -10 °C gelagert werden oder wenn sie wiederholt während eines Zeitraums von 24 Stunden einem Temperaturwechsel zwischen -10 °C und 40 °C unterworfen werden. Die Zusammensetzungen sind ebenfalls stabil bei niedrigen Temperaturen.

Gemäß einer bevorzugten Ausführungsform der Erfindung eignen sich die erfindungsgemäßen stabilen bioziden Zusammensetzungen aufgrund ihres hohen Gehalts an BIT besonders als Konzentrat zur Herstellung von BIT-haltigen Biozidformulierungen. Da bei der Herstellung BIT-haltiger Biozidformulierungen bisher meist auf BIT in Form eines feuchten Filterkuchens, zurückgegriffen wurde, kam es bei dem Umgang mit dem Filterkuchen meist zur Freisetzung reizender Stäube. Die erfindungsgemäßen Zusammensetzungen überwinden diesen Nachteil des Standes der Technik, indem sie BIT in hoher Konzentration zur Verfügung stellen, welches leicht und unproblematisch gehandhabt, dosiert und abgemessen werden kann.

Die Verwendung der erfindungsgemäßen stabilen bioziden Zusammensetzungen ist aufgrund des breiten Wirkspektrums des BIT besonders geeignet für die Konservierung wasserhaltiger technischer Produkte und Materialien wie, Farben, Lacken, Lasuren und Putzen, Emulsionen, Latices, Polymerdispersionen, Kreideaufschlämmungen, mineralischen Slurrys, Ligninsulfonaten und Stärkepräparationen in Anstrichmitteln keramischen Massen, Klebstoffen, Duftstoffen, kaseinhaltigen Produkten, stärkehaltigen Produkten, Bitumenemulsionen, Tensidlösungen, Kraftstoffen, Reinigungsmitteln, Pigmentpasten und Pigmentdispersionen, Tinten, lithographischen Flüssigkeiten, Verdickern, kosmetischen Produkten, Toilettenartikeln, Wasserkreisläufen, Flüssigkeiten bei der Holzverarbeitung, Flüssigkeiten bei der Erdölgewinnung, Flüssigkeiten bei der Papierverarbeitung, Flüssigkeiten bei der Lederherstellung, Flüssigkeiten bei der Textilherstellung, Bohr- und Schneidölen, hydraulischen Flüssigkeiten und Kühlschmierstoffen. Vorteilhafterweise eignen sich die erfindungsgemäßen Zusammensetzungen aufgrund ihres hohen Wirkstoff und geringen Wasseranteils weiterhin zur Konservierung pulverförmiger Produkte wie beispielsweise zur Konservierung von Stärke, Stärkepulver und Verdicker auf Cellulosebasis, wie beispielsweise Methylcellulose.

Neben dem zumindest teilweise in Form des Kaliumsalzes vorliegenden BIT können erfindungsgemäß je nach Anwendungszweck der erfindungsgemäßen Zusammensetzung zusätzlich noch ein oder mehrere weitere Biozide mit verwendet werden, die in Abhängigkeit des Anwendungsgebietes ausgewählt werden können. Spezielle Beispiele für solche weiteren Biozide sind nachfolgend angegeben:

Benzylalkohol; 2,4-Dichlorbenzylalkohol; 2-Phenoxyethanol; 2-Phenoxyethanolhemiformal, Phenylethylalkohol; 5-Brom-5-nitro-1,3-dioxan; Bronopol; Formaldehyd und Formaldehyd-Depotstoffe; Dimethyloldimethylhydantoin; Glyoxal; Glutardialdehyd; Sorbinsäure; Benzoesäure; Salicylsäure; p-Hydroxybenzoesäureester; Chloracetamid; N-Methylolchloracetamid; Phenole, wie p-Chlor-m-kresol und o-Phenylphenol; N-Methylolharnstoff; N,N'-Dimethylolharnstoff; Benzylformal; 4,4-Dimethyl-1,3-oxazolidin; 1,3,5-Hexahydrotriazinderivate; Quartäre Ammoniumverbindungen, wie N-Alkyl-N,N-dimethylbenzylammoniumchlorid und Di-n-decyldimethylammoniumchlorid; Cetylpyridiniumchlorid; Diguanidin; Polybiguanid; Chlorhexidin; 1,2-Dibrom-2,4-dicyanobutan; 3,5-Dichlor-4-hydroxybenzaldehyd; Ethylenglykolhemiformal; Tetra-(hydroxymethyl)-phosphoniumsalze; Dichlorophen; 2,2-Dibrom-3-nitrilopropionsäureamid; 3-Iod-2-propinyl-N-butylcarbamat; Methyl-N-benzimidazol-2-ylcarbamat; 2,2'-Dithio-dibenzoesäure-di-N-methylamid; 2-Thiocyanomethylthiobenzthiazol; C-Formale wie 2-Hydroxymethyl-2-nitro-1,3-propandiol und 2-Brom-2-nitropropan-1,3-diol; Methylenbisthiocyanat; Umsetzungsprodukte von Allantoin; 2-Methyl-isothiazolin-3-on; N-Alkyl-1,2-benzisothiazolin-3-one mit 1 bis 8 C-Atomen im Alkylrest; N-Methyl-1,2-benzisothiazolin-3-on; N-Butyl-1,2-benzisothiazolin-3-on; 4,5-Dichlor-2-n-Octylisothiazolin-3-on (DCOIT); 2-n-Octylisothiazolin-3-on (OIT), 4,5-Trimethylen-2-methylisothiazolin-3-on; Zinkpyrithion; Chlorothalonin; Propioconazol; Tebuconazol; TCMTB; IPBC, Terbutryn, Cyfluthrin, Isoproturon Triclosan.

Beispiele für Formaldehyd-Depotstoffe sind N-Formale, wie Tetramethylolacetylendihamstoff; N,N'-Dimethylolhamstoff; N-Methylolhamstoff; Dimethyloldimethylhydantoin; N-Methylolchloracetamid; Umsetzungsprodukte von Allantoin; Glykolformale, wie Ethylenglykolformal; Butyldiglykolformal; Benzylformal.

Gemäß der Erfindung sind bevorzugte weitere biozide Wirkstoffe ein oder mehrere Biozide aus der Gruppe OIT, N-Butyl-BIT, N-Methyl-BIT, IPBC, Tebuconazol, DCOIT, Terbutryn, Cyfluthrin, Isoproturon, Triclosan und Zinkpyrithion.

Werden in der erfindungsgemäßen bioziden Zusammensetzung als biozider Wirkstoff neben dem BIT noch weitere Biozide verwendet, so können diese weiteren Biozide ebenfalls als Kaliumsalze zusammen mit dem BIT als Gemisch in der bioziden Zusammensetzung enthalten sein.

Die Erfindung umfasst ferner ein Verfahren zur Herstellung einer Zusammensetzung, in welchem man die Einzelkomponenten unter Rühren bei einer Temperatur von 25 +/- 20 °C miteinander vermischt. Die Zusammensetzungen kann hergestellt werden, indem man die Einzelkomponenten, gegebenenfalls unter Zugabe eines oder mehrerer Lösungsmittel und gegebenenfalls weiterer antimikrobiell wirksamer Verbindungen vermischt. Die stabile biozide Zusammensetzung kann insbesondere dadurch hergestellt werden, indem man das BIT vorzugsweise in Form eines feuchten Filterkuchens in vorgelegtem Monoethylenglykol oder einem Monoethylenglykol/Lösungsmittelgemisch, das gegebenenfalls eine kleine Menge an Wasser enthält, unter Rühren bei einer Temperatur von etwa 25 +/- 20 °C suspendiert. Daran anschließend wird das Kaliumhydroxid zugegeben. Das Gemisch wird daraufhin bei einer Temperatur von etwa 25 +/- 20 °C gerührt, bis sich der Feststoff aufgelöst hat. Gemäß einer weiteren Ausführungsform kann das Kaliumhydroxid auch in Form einer konzentrierten wässrigen Lösung mit einer Konzentration von 50 Gew.-% zugesetzt werden. Die stabile biozide Zusammensetzung kann daran anschließend gegebenenfalls entweder warm oder nach dem Abkühlen auf Umgebungsbedingungen filtriert werden.

Die stabile biozide Zusammensetzung der vorliegenden Erfindung weist eine ähnliche Wirkung bei der Bekämpfung von Mikroorganismen auf, wie vorhandene Formulierungen von BIT und kann daher in Form ihres verdünnten Konzentrats zum Schutz von wässrigen technischen Produkten verwendet werden, um deren mikrobiellen Befall beziehungsweise deren mikrobielle Zersetzung zu verhindern.

Die erfindungsgemäßen bioziden Zusammensetzungen sind gebrauchsfertig und werden im Allgemeinen nicht verdünnt. Diese werden dem zu konservierenden Produkt direkt zugegeben. Die Anwendungskonzentration in den technischen Produkten richtet sich nach der Art und dem Vorkommen der zu bekämpfenden Mikroorganismen, der mikrobiellen Ausgangsbelastung, sowie nach der Zusammensetzung des zu schätzenden Materials. Die optimale Einsatzmenge kann vom Fachmann durch Testreihen ermittelt werden. Im Allgemeinen liegen die Anwendungskonzentrationen im Bereich von 0,001 bis 5 Gew.%, vorzugsweise von 0,001 bis 1 Gew.-% der erfindungsgemäßen Zusammensetzung, bezogen auf das zu schützende beziehungsweise zu konservierende Material.

Die folgenden Beispiele und Vergleichsbeispiele dienen zur weiteren Veranschaulichung der vorliegenden Erfindung.

### Beispiele 1 - 6

### Beispiel 1:

Zu 458,4 g Monoethylenglykol wurden 411,8 g ACTICIDE^{™} BIT (technisch reines BIT mit einem Wassergehalt von 15,6%) gegeben und unter Rühren bei Raumtemperatur suspendiert. Anschließend wurden 129,8 g Ätzkali (90 % KOH) hinzugegeben und unter Rühren bei Raumtemperatur suspendiert. Die erhaltene Zusammensetzung hatte einen pH-Wert von 9,4 und einen BIT-Gehalt von 34,76 Gew.-%.

### Beispiel 2:

Zu 448,5 g Monoethylenglykol wurden 421,7 g ACTICIDE^{™} BIT (technisch reines BIT mit einem Wassergehalt von 17,4 %) gegeben und unter Rühren bei Raumtemperatur suspendiert. Anschließend wurden 129,8 g Ätzkali (90% KOH) hinzugegeben und unter Rühren bei Raumtemperatur suspendiert. Die erhaltene Zusammensetzung hatte einen pH-Wert von 9,5 und einen BIT-Gehalt von 35,00 Gew.-%.

### Beispiel 3:

Zu 188,6 g der Zusammensetzung nach Beispiel 1 wurden 11,4 g destilliertes Wasser gegeben. Die erhaltene Zusammensetzung wies einen pH-Wert von 9,4 auf und hatte einen BIT-Gehalt von 32,7 Gew.-%.

### Beispiel 4:

Zu 188,6 g der Zusammensetzung nach Beispiel 1 wurden 11,4 g Monoethylenglykol gegeben. Die erhaltene Zusammensetzung wies einen pH-Wert von 9,4 auf und hatte einen BIT-Gehalt von 32,7 Gew.-%.

### Beispiel 5:

Zu 188,6 g der Zusammensetzung nach Beispiel 2 wurden 11,4 g destilliertes Wasser gegeben. Die erhaltene Zusammensetzung wies einen pH-Wert von 9,3 auf und hatte einen BIT-Gehalt von 33,1 Gew.-%.

### Beispiel 6:

Zu 188,6 g der Zusammensetzung nach Beispiel 1 wurden 11,4 g Monoethylenglykol gegeben. Die erhaltene Zusammensetzung wies einen pH-Wert von 9,3 auf und hatte einen BIT-Gehalt von 32,99 Gew.-%.

Die vorstehend beschriebenen Zusammensetzungen waren homogen und wiesen alle gute Lagereigenschaften auf. Die Lagereigenschaften bei niedrigen Temperaturen von 2 °C waren selbst nach dreimaligem Impfen mit Kalium-BIT-Kristallen unbeeinflusst. Es war keine Feststoffabscheidung zu beobachten.

### Beispiel 7 und Vergleichsbeispiele A bis E

### Beispiel 7:

Zu 44,3 g Monoethylenglykol wurden 41,4 g ACTICIDE^{™} BIT (technisch reines BIT mit einem Wassergehalt von 15,5 %) gegeben und unter Rühren bei Raumtemperatur suspendiert. Anschließend wurden 14,3 g Ätzkali (90% KOH) hinzugegeben und unter Rühren bei Raumtemperatur suspendiert. Die erhaltene Zusammensetzung hatte einen pH-Wert von 10,2 und einen BIT-Gehalt von 35,1 Gew.-%.

### Vergleichsbeispiel A:

Zu 44,3 g Dipropylenglykol wurden 41,4 g ACTICIDE^{™} BIT (technisch reines BIT mit einem Wassergehalt von 15,5 %) gegeben und gerührt. Anschließend wurden 14,3 g Ätzkali (90% KOH). Das erhaltene Produkt löste sich nicht in dem Lösungsmittel und war daher unbrauchbar.

### Vergleichsbeispiel B:

Zu 44,5 g Dipropylenglykol wurden 41,4 g ACTICIDE^{™} BIT (technisch reines BIT mit einem Wassergehalt von 15,5 %) und 4,8 g destilliertes Wasser hinzugegeben und unter Rühren bei Raumtemperatur suspendiert. Anschließend wurden 9,3 g Natriumhydroxid unter Rühren hinzugegeben. Das erhaltene Produkt war sehr zähflüssig, hatte einen pH-Wert von 9,75 und eine BIT-Gehalt von 35,6 Gew.-%.

### Vergleichsbeispiel C:

Zu 44,5 g Monoethylenglykol und 4,8 g destilliertem Wasser wurden 41,4 g ACTICIDE^{™} BIT (technisch reines BIT mit einem Wassergehalt von 15,5 %) gegeben und unter Rühren bei Raumtemperatur suspendiert. Anschließend wurden 9,3 g Natriumhydroxid hinzugegeben und unter Rühren bei Raumtemperatur suspendiert. Die erhaltene Zusammensetzung hatte einen pH-Wert von 9,2 und eine BIT-Gehalt von 35,6 Gew.-%. Das Produkt war gelöst, kristallisierte jedoch nach einer Stunde bei Raumtemperatur aus.

### Vergleichsbeispiel D:

Zu 44,5 g Dipropylenglykol und 7, 8 g destilliertem Wasser wurden 35,5 g ACTICIDE^{™} BIT (technisch reines BIT mit einem Wassergehalt von 15,5 %) gegeben und unter Rühren bei Raumtemperatur suspendiert. Anschließend wurden 12,2 g Ätzkali (90% KOH) hinzugegeben und unter Rühren bei Raumtemperatur suspendiert. Die erhaltene Zusammensetzung hatte einen pH-Wert von 10,3 und eine BIT-Gehalt von 30,1 Gew.-%. Sie kristallisierte nach kurzem Stehen bei Raumtemperatur aus.

### Vergleichsbeispiel E:

Zu 50 g Dipropylenglykol und 21,2 g Wasser wurden 23,6 g ACTICIDE^{™} BIT (technisch reines BIT mit einem Wassergehalt von 15,5 %) gegeben und unter Rühren bei Raumtemperatur suspendiert. Anschließend wurden 5,2 g NaOH hinzugegeben und unter Rühren bei Raumtemperatur suspendiert. Die erhaltene Zusammensetzung hatte einen pH-Wert von 10,0 und eine BIT-Gehalt von 19,9 Gew.-%. Die Viskosität dieser Zusammensetzung war bedingt durch das verwendete Lösungsmittel deutlich höher als die Viskosität der erfindungsgemäßen Zusammensetzung mit höherer BIT-Konzentration.

Die erfindungsgemäße Zusammensetzung nach Beispiel 7 ließ keine Feststoffabscheidung beobachten, zeigte gute Lagereigenschaften, und kristallisierte selbst nach dreimaligem Impfen mit Kalium-BIT-Kristallen bei einer Temperatur von 2 °C nicht aus.

Die Zusammensetzung nach Vergleichsbeispiel A, in dem - verglichen mit Beispiel 7 - das Monoethylenglykol durch Dipropylenglykol ersetzt worden war, löste sich nicht und war bei Raumtemperatur kristallin. Die Zusammensetzung nach Vergleichsbeispiel B, in dem - verglichen mit Beispiel 7 - das Monoethylenglykol gegen Dipropylenglykol und das Kaliumhydroxid gegen Natriumhydroxid ausgetauscht worden waren, war trotz erhöhtem Wassergehalt sehr viskos und kristallisierte bereits beim ersten Animpfen bei 2 °C aus. Die Zusammensetzung nach Vergleichsbeispiel C, in dem - verglichen mit Vergleichsbeispiel B - an Stelle des Kaliumhydroxid Natriumhydroxid verwendet wurde, war ebenfalls sehr viskos und kristallisierte bereits nach einem Tag bei Raumtemperatur aus. Die Zusammensetzung nach Vergleichsbeispiel D unterscheidet sich von der Zusammensetzung nach Beispiel 7 durch eine verminderte Konzentration von BIT und Kaliumhydroxid, darüber hinaus wurden an Stelle des Monoethylenglykols Dipropylenglykol und Wasser verwendet. Auch diese Zusammensetzung kristallisierte nach einem Tag bei Raumtemperatur aus. Die Zusammensetzung nach Vergleichsbeispiel E wies einen geringen Anteil an BIT in Form des Natriumsalzes von lediglich 19,9 Gew.-% in Dipropylenglykol und Wasser auf. Ihre Lagereigenschaften bei niedrigen Temperaturen von 2 °C waren selbst nach dreimaligem Impfen mit Natrium-BIT-Kristallen unbeeinflusst.

Anhand der dargestellten Beispiele und Vergleichsbeispiele lassen sich deutlich die Vorteile der vorliegenden Erfindung erkennen, welche die erfindungsgemäßen stabilen biozide Zusammensetzungen mit einem BIT-Gehalt von 25 bis 50 Gew.-% zur Verfügung stellt.

## Patentansprüche

1. Biozide Zusammensetzung umfassend 25 bis 50 Gew.-% 1,2-Benzisothiazolin-3-on (BIT), 30 bis 70 Gew.-% Monoethylenglykol und optionsweise weitere Bestandteile, wobei sich die einzelnen Bestandteile der Zusammensetzung auf 100 Gew.-% addieren, und bezogen auf ein Mol BIT 0,5 bis 1,1 Mol K⁺-Ionen in der bioziden Zusammensetzung vorhanden sind.

2. Biozide Zusammensetzung nach Anspruch 1, wobei bezogen auf ein Mol BIT 0,7 bis 1,0 Mol K⁺-Ionen in der bioziden Zusammensetzung vorhanden sind.

3. Biozide Zusammensetzung nach Anspruch 1, wobei bezogen auf ein Mol BIT 0,90 bis 0,98 Mol K⁺-Ionen in der bioziden Zusammensetzung vorhanden sind.

4. Zusammensetzung nach einem der Ansprüche 1 bis 3, mit einem pH-Wert von 9 bis 11.

5. Zusammensetzung nach einem der Ansprüche 1 bis 4 mit einer Viskosität kleiner 500 mPas.

6. Verwendung einer Zusammensetzung gemäß einem der Ansprüche 1 bis 5 als Konservierungsmittel zum Schutz von wasserhaltigen technischen Produkten vor Befall und/oder Zerstörung durch Mikroorganismen.

7. Verwendung einer Zusammensetzung gemäß Anspruch 6, als Konservierungsmittel für Farben, Lacke, hydraulischen Flüssigkeiten, Kühlschmierstoffen, Treibstoffe, Stärkepulver und Verdicker auf Cellulosebasis.

8. Verwendung einer Zusammensetzung gemäß einem der Ansprüche 1 bis 5 zur Herstellung von Biozidformulierungen.

9. Konserviertes Produkt, enthaltend eine biozide Zusammensetzung wie in einem der Ansprüche 1 bis 5 beschrieben.

10. Konserviertes- Produkt nach Anspruch 9, ausgewählt aus Ligninsulfonaten und Stärkepräparationen in Anstrichmitteln, Farben, Lacken, Lasuren und Putzen, Emulsionen, Latices, Polymerdispersionen, Kreideaufschlämmungen, mineralischen Slurrys, keramischen Massen, Klebstoffen, Duftstoffen, kaseinhaltigen Produkten, stärkehaltigen Produkten, Bitumenemulsionen, Tensidlösungen, Kraftstoffen, Reinigungsmitteln, Pigmentpasten und Pigmentdispersionen, Tinten, lithographischen Flüssigkeiten, Verdickern, kosmetischen Produkten, Toilettenartikeln, Wasserkreisläufen, Flüssigkeiten bei der Holzverarbeitung, Flüssigkeiten bei der Erdölgewinnung, Flüssigkeiten bei der Papierverarbeitung, Flüssigkeiten bei der Lederherstellung, Flüssigkeiten bei der Textilherstellung, Bohr- und Schneidölen, hydraulischen Flüssigkeiten und Kühlschmierstoffen.

11. Konserviertes Produkt nach einem der Ansprüche 9 und 10, enthaltend die biozide Zusammensetzung nach einem der Ansprüche 1 bis 5 in einem Anteil von 0,001 bis 5 Gew.-%.

## Claims

1. Biocidal composition comprising 25% to 50% by weight of 1,2-benzisothiazolin-3-one (BIT), 30% to 70% by weight of monoethylene glycol and optionally further constituents, the individual constituents of the composition adding up to 100% by weight and there being, relative to one mole of BIT, 0.5 to 1.1 mole of K⁺ ions in the biocidal composition.

2. Biocidal composition according to Claim 1, there being, relative to one mole of BIT, 0.7 to 1.0 mol of K⁺ ions in the biocidal composition.

3. Biocidal composition according to Claim 1, there being, relative to one mole of BIT, 0.90 to 0.98 mol of K⁺ ions in the biocidal composition.

4. Composition according to any of Claims 1 to 3, having a pH of 9 to 11.

5. Composition according to any of Claims 1 to 4, having a viscosity of less than 500 mPas.

6. Use of a composition according to any of Claims 1 to 5 as a preservative for protecting water-containing industrial products from infestation and/or destruction by microorganisms.

7. Use of a composition, according to Claim 6, as a preservative for paints, varnishes, hydraulic fluids, cooling lubricants, fuels, starch powders and thickeners based on cellulose.

8. Use of a composition according to any of Claims 1 to 5 for producing biocide formulations.

9. Preserved product comprising a biocidal composition as described in any of Claims 1 to 5.

10. Preserved product according to Claim 9, selected from lignosulphonates and starch preparations in coating materials, paints, varnishes, glazes and renders, emulsions, latices, polymer dispersions, chalk suspensions, mineral slurries, ceramic masses, adhesives, fragrances, casein-containing products, starch-containing products, bitumen emulsions, surfactant solutions, motor fuels, cleaning products, pigment pastes and pigment dispersions, liquid inks, lithographic fluids, thickeners, cosmetic products, toiletries, water circuits, liquids in wood processing, liquids in petroleum extraction, liquids in paper processing, liquids in leather production, liquids in textile production, drilling and cutting oils, hydraulic fluids and cooling lubricants.

11. Preserved product according to either of Claims 9 and 10, comprising the biocidal composition according to any of Claims 1 to 5 in a fraction of 0.001% to 5% by weight.

## Revendications

1. Composition biocide comprenant 25 à 50 % en poids de 1,2-benzoisothiazolin-3-one (BIT), 30 à 70 % en poids de monoéthylèneglycol, et en option d'autres constituants, la quantité totale des composants individuels de la composition étant de 100 % en poids, et, par mole de BIT, on a dans la composition biocide 0,5 à 1,1 moles d'ions K⁺.

2. Composition biocide selon la revendication 1, dans laquelle on a dans la composition biocide, par mole de BIT, 0,7 à 1,0 mole d'ions K⁺.

3. Composition biocide selon la revendication 1, dans laquelle on a dans la composition biocide, par mole de BIT, 0,90 à 0,98 mole d'ions K⁺.

4. Composition selon l'une des revendications 1 à 3, ayant un pH de 9 à 11.

5. Composition selon l'une des revendications 1 à 4, ayant une viscosité inférieure à 500 mPa.s.

6. Utilisation d'une composition selon l'une des revendications 1 à 5 en tant qu'agent conservateur pour la protection de produits techniques aqueux vis-à-vis d'une infestation et/ou d'une destruction par des microorganismes.

7. Utilisation d'une composition selon la revendication 6, en tant qu'agent conservateur pour peintures, vernis, liquides hydrauliques, réfrigérants-lubrifiants, carburants, fécule blutée, et épaississants à base de cellulose.

8. Utilisation d'une composition selon l'une des revendications 1 à 5 pour fabriquer des formulations biocides.

9. Produit conservé, contenant une composition biocide telle que décrite dans l'une des revendications 1 à 5.

10. Produit conservé selon la revendication 9, choisi parmi les ligninesulfonates et les préparations d'amidon dans les produits couvrants, les peintures, les vernis, les lasures et les enduits, les émulsions, les latex, les dispersions de polymères, les suspensions de craie, les suspensions minérales, les masses céramiques, les adhésifs, les parfums, les produits contenant de la caséine, les produits
contenant de l'amidon, les émulsions de bitume, les solutions de tensioactifs, les carburants, les produits nettoyants, les pâtes pigmentaires et les dispersions pigmentaires, les encres, les liquides pour lithographie, les épaississants, les produits cosmétiques, les articles de toilette, les circuits d'eau, les liquides utilisés pour la transformation du bois, les liquides utilisés pour la récupération du pétrole, les liquides utilisés pour la transformation du papier, les liquides utilisés pour la fabrication du cuir, les liquides utilisés pour la fabrication des textiles, les huiles de perçage et de coupe, les liquides hydrauliques et les réfrigérants-lubrifiants.

11. Produit conservé selon l'une des revendications 9 et 10, contenant la composition biocide selon l'une des revendications 1 à 5 selon une proportion de 0,001 à 5 % en poids.
